**Europäisches Patentamt**

**European Patent Office**

**Office européen des brevets**

(19)

(11) Veröffentlichungsnummer: **0 220 510**
**B1**

(12)

# EUROPÄISCHE PATENTSCHRIFT

(45) Veröffentlichungstag der Patentschrift:
**23.08.89**

(21) Anmeldenummer: **86113303.1**

(22) Anmeldetag: **26.09.86**

(51) Int. Cl.⁴: **F23C 11/02**, F01K 23/06,
F23L 15/04, F22B 1/24,
F02C 6/10

(54) **Druckaufgeladen betreibbare Feuerung für einen Dampferzeuger.**

(30) Priorität: **12.10.85 DE 3536451**

(43) Veröffentlichungstag der Anmeldung:
**06.05.87 Patentblatt 87/19**

(45) Bekanntmachung des Hinweises auf die Patenterteilung:
**23.08.89 Patentblatt 89/34**

(84) Benannte Vertragsstaaten:
**AT BE CH DE FR GB IT LI NL SE**

(56) Entgegenhaltungen:
**DE-A- 3 206 688**
**DE-A- 3 404 915**
**DE-C- 3 004 848**
**FR-A- 1 049 825**
**US-A- 3 715 887**
**US-A- 3 765 170**

(73) Patentinhaber: **L. & C. Steinmüller GmbH,**
**Postfach 10 08 55/10 08 65 Fabrikstrasse 1,**
**D-5270 Gummersbach 1(DE)**

(72) Erfinder: **Pitt, Reinhold Ulrich, Dr.-Ing., Kirchrather**
**Strasse 18, D-5100 Aachen(DE)**
Erfinder: **Dibelius, Günther H., Prof. Dr., Fichthang 11,**
**D-5100 Aachen(DE)**

(74) Vertreter: **Carstens, Wilhelm, Dipl.-Phys., L. & C.**
**Steinmüller GmbH Patentabteilung**
**Postfach 10 08 55/10 08 65, D-5270 Gummersbach 1(DE)**

**Beschreibung**

Die Erfindung betrifft eine Feuerung der im Oberbegriff des Anspruchs 1 genannten Art.

Aus der FR-A 1 049 825 ist eine solche druckaufgeladen betreibbare Feuerung für einen Dampferzeuger bekannt, bei der zwei luftseitig hintereinandergeschaltete unabhängig voneinander drehbare Luftverdichter vorgesehen sind, die jeweils von einer Turbine antreibbar sind und zusammen mit dieser und einem elektrischen Anlaßmotor auf einer Welle angeordnet sind.

Die komprimierte Verbrennungsluft wird der Feuerung ohne Vorwärmung zugeführt, und zwischen den beiden rauchseitig hintereinander geschalteten Gasturbinen ist ein in den Wasserkreislauf des Dampferzeugers eingebundener Wärmetauscher angeordnet. Dieser ist mit Speisewasser relativ niedriger Eintrittstemperatur zu beaufschlagen.

Aus der DE-OS 3 004 848 ist eine druckaufgeladen betreibbare Feuerung für einen Dampferzeuger bekannt, bei der der zweite Luftverdichter von einem mittels Fremdenergie erregten Elektromotor angetrieben wird. Durch den Antrieb des zweiten Verdichters mittels Fremdenergie bei druckaufgeladenem Betrieb kann mit der Feurung kein optimaler Wirkungsgrad erreicht werden. Weiterhin liegt der Rauchgas-Verbrennungsluft-Wärmetauscher rauchgasseitig parallel zur Gasturbine des Turboladers und wird bei druckaufgeladenem Betrieb dem Grundsatz nach nicht mit Rauchgas beaufschlagt. Der Wärmetauscher bzw. der Gasturbine sind jedoch Ventile vorgeschaltet, die jeweils gegensinnig so gestellt werden können, daß das Druckerhöhungssystem in der Lage ist, kontinuierlich bis zum höchsten Auslegungsdruck die Wirbelschicht zu versorgen. Auch in diesem Falle kann jedoch nicht auf den Antrieb des zweiten Luftverdichters mit Fremdenergie verzichtet werden.

Aus der US-PS 3 765 170 ist eine Gasturbinenanordnung mit einer Hauptturbine und einer Hilfsturbine bekannt, bei der in einem Hauptkompressor verdichtete Verbrennungsluft über einen Abgas-Luft-Wärmetauscher dem Brenner der Hauptturbine zugeführt wird. Ein Teil der vom Hauptkompressor verdichteten Luft wird in einem Hilfsverdichter nachverdichtet und über einen Abgas-Luft-Wärmetauscher dem Brenner der Hilfsturbine zugeführt. Das den Abgas-Luft-Wärmetauscher der Hilfsturbine verlassende Abgas wird auf den Einlaß der Hauptturbine geführt. Das Abgas der Hauptturbine wird keiner weiteren Entspannung entzogen.

Ausgehend von dem gattungsgemäßen Verfahren gemäss der FR-A 1 049 825 ist es die Aufgabe der vorliegenden Erfindung, den Wirkungsgrad durch Verbesserung des Wärmeabbaues nach dem Feuerungsraum nachgeschalteten zweiten Turbine anzuheben.

Diese Aufgabe wird dadurch gelöst, daß zwischen der zweiten Gasturbine und dem Wärmetauscher einerseits sowie zwischen dem zweiten Verdichter und der Feuerung andererseits zusätzlich ein außerhalb der Feuerung angeordneter Rauchgas-Verbrennungsluft-Wärmetauscher für die verdichtete Verbrennungsluft eingeschaltet ist, daß der erste Verdichter und die erste Gasturbine auf freilaufender Welle betreibbar sind und daß die dem zweiten Verdichter zugeordnete elektrische Maschine auch als Generator betreibbar ist.

Bei druckaufgeladenem Betrieb erfolgt beim erfindungsgemäßen Verfahren die Luftvorwärmung nicht im Feuerraum, sondern erst nach einer ersten Teilexpansion bei hoher Temperatur in der zweiten Gasturbine, wobei neben der Verdichterleistung elektrische Leistung erzeugt wird.

Durch die Luftvorwärmung und die nachfolgende Wärmeübergabe an den Wasserkreislauf wird die erste Gasturbine mit Rauchgasen einer solchen Temperatur beaufschlagt, daß das Rauchgas vom Austritt der ersten Gasturbine aus ohne weitere Abkühlung direkt einem Kamin zugeleitet werden kann.

Durch die Teilexpansion bei hoher Temperatur in einer Gasturbine vor der Luftvorwärmung unter Erzeugung elektrischer Leistung und der weiteren Expansion nach Luftvorwärmung und Wärmetausch mit dem Wasser-Dampf-Kreislauf wird insgesamt der Wirkungsgrad des Verfahrens verbessert.

Durch den Freilauf des ersten Verdichters und der ersten Turbine auf eigener Welle ist eine freie Einstellung ihrer Drehzahl entsprechend dem Leistungsgleichgewicht bei gegebener Teillast der Feuerung möglich. Hierdurch wird ein guter Teillast-Wirkungsgrad des Gesamtsystems erreicht.

Wenn die elektrische Maschine nicht nur als Generator betreibbar ist, sondern auch als Elektromotor, kann ein gesonderter Anfahrmotor in Fortfall kommen.

Um die Leistungsregelung bei druckaufgeladenem Betrieb zu verbessern, ist es von Vorteil, daß dem in den Wasserkreislauf des Dampferzeugers eingebundenen Wärmetauscher eine steuerbare Rauchgas-Umgehungsleitung parallel geschaltet ist.

Falls die druckaufgeladen betreibbare Feuerung unter atmosphärischen Bedingungen betrieben werden muss, ist es von Vorteil, daß bei nicht aufgeladenem Betrieb dem ersten Verdichter und einem Kühler zwischen den Verdichtern eine Verbrennungsluft-Umgehungsleitung und der zweiten Turbine eine Rauchgas-Umgehungsleitung zugeordnet sind, die beide vorzugsweise steuerbar sind.

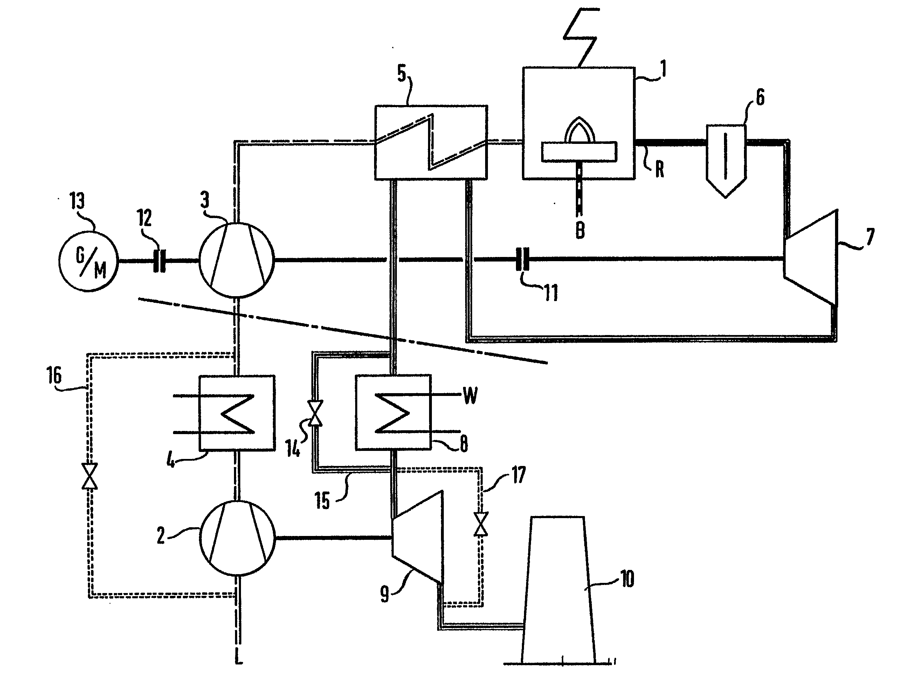

Die Erfindung soll nun anhand der beigefügten Figur näher erläutert werden.

Die Verdichtung der Verbrennungsluft L für die Feuerung 1 erfolgt über zwei hintereinander geschaltete Luftverdichter 2 und 3, zwischen denen ein Kühler 4 eingeschaltet ist. Die verdichtete Verbrennungsluft wird vor Eintritt in die Feuerung 1 in einem Rauchgas-Verbrennungsluft-Wärmetauscher bzw. einem Luftvorwärmer 5 vorgewärmt.

Falls die Feuerung mit einem Brennstoff B betrieben wird, der zu einer Staubbeladung des die Feuerung 1 verlassenden Rauchgases R führt, ist der Feuerung ein Schlauchfilter 6 oder ein anderer Abscheider nachgeschaltet, der hohen Rauchgastemperaturen, vorzugsweise der Feuerraumtemperatur, gewachsen ist. Derartige Filter stehen in der letzten Zeit zur Verfügung. Das Rauchgas wird in einer heißbeaufschlagten Turbine 7 teilentspannt, beispielsweise unter einer Temperaturabsenkung von 850°C auf 550°C. Das so teilentspannte Rauchgas wird dem Luftvorwärmer 5 zugeführt. Da der Luftvorwärmer sowohl luftseitig als auch rauchseitig unter Druck betrieben wird, baut er klein und ist im Vergleich zu drucklosem Betrieb dementsprechend kostengünstig.

Das den Luftvorwärmer 5 verlassende Rauchgas wird einem in den Wasserkreislauf W des Dampferzeugers eingebundenen Wärmetauscher 8 zugeleitet, z.B. mit einer Temperatur von 385°. Das den Wärmetauscher 8 verlassende Gas wird einer Turbine 9 zugeführt, die zusammen mit dem ersten Verdichter 2 einen Turbolader bildet. Z.B. kann das Rauchgas der Turbine 9 mit einer Temperatur von 188° zugeführt werden, so daß es nach seiner Entspannung mit einer entsprechend niedrig zulässigen Temperatur einem Kamin 10 zugeleitet werden kann. Dem Turbolader bestehend aus dem Verdichter 2 und der Turbine 9 auf eigener freilaufender Welle ist somit verdichterseitig der Kühler 4 nachgeschaltet und turbinenseitig ein Wärmetauscher 8 vorgeschaltet. Diese Baugruppe ist durch die strichpunktierte Linie in der Figur von den anderen Bestandteilen abgesetzt dargestellt.

Die Turbine 7 ist z.B. über eine Kupplung 11 mit dem Verdichter 3 verbunden, der seinerseits über eine Kupplung 12 mit einer zumindest als Generator betreibbaren elektrischen Maschine 13 verbunden ist. Die elektrische Maschine 13 kann auch als Motor geschaltet werden, wobei die Schaltung als Motor in erster Linie während des Anfahrens erforderlich ist.

Zur Druckanpassung ist dem Wärmetauscher 8 eine durch ein Ventil 14 steurbare Rauchgas-Umgehungsleitung 15 zugeordnet. In diesem Fall ist der Wärmetauscher 8 vorzugsweise wasserseitig in einem Zwangsumlauf eingeschaltet.

In der Figur sind dem Verdichter 3 und dem Kühler 4 einerseits und der Turbine 9 andererseits vorzugsweise steuerbare Umgehungsleitungen 16 bzw. 17 in punktierter Darstellung zugeordnet, die bei zu niedrigen Rauchgastemperaturen und/oder bei atmosphärischem Betrieb erforderlich sein können. Die Feuerung kann auch als Feuerung mit "turboaufgeladener Gasturbine" bezeichnet werden. Oberhalb der strichpunktierten Linie ist die Kraftmaschine "Gasturbine" dargestellt, die aus Verdichter 3, Luftvorwärmer 5, Feuerung 1, Turbine 7 und Generator 13 besteht. Im unteren Bildteil ist der dieser Gasturbine zugeordnete Turbolader 1, 9 mit zugeordneten Wärmetauschern bzw. Kühlern dargestellt.

Bei der Feuerung kann der Druck im Feuerraum der Feuerung 1 nach feuerungs- und emmissionstechnischen und/oder Kompaktheitsanforderungen gewählt werden. Das zu der Feuerraumtemperatur der Feuerung gehörige optimale Druckverhältnis der vorstehend umrissenen Kraftmaschine "Gasturbine" kann durch einen entsprechenden am Einlaß des Verdichters 3 anstehenden Basisdruck, der mit Hilfe des Turboladers 2, 4, 8, 9 erzeugt wird, eingestellt werden. Die Höhe des Basisdrucks wird bei der Auslegung durch die Temperatur vor der Turbine 9 und somit durch die entsprechende Abkühlung des der Turbine zugeführten Rauchgases bestimmt. Bei Betrieb kann insbesondere durch entsprechende Stelleingriffe an der Umgehungsleitung 15 des Wärmetauschers 8 die Eintrittstemperatur in die Turbine 9 geregelt werden.

## Patentansprüche

1. Druckaufgeladen betreibbare Feuerung (1) für einen Dampferzeuger, insbesondere Wirbelschichtfeuerung, mit mindestens zwei luftseits hintereinander geschalteten, unabhängig voneinander drehenden Luftverdichtern (2, 3), von denen der erste unter Bildung eines Turboladers von einer ersten Gasturbine (9) angetrieben wird, in der dem Rauchgas der druckaufgeladenen Feuerung die zum Antrieb des Verdichters notwendige Energie entzogen wird, und von denen der zweite Verdichter (3) von einer zweiten Gasturbine (7) angetrieben wird, wobei dem zweiten Verdichter eine elektrische Maschine (13) zugeordnet ist, und mit einem der zweiten Turbine (7) nachgeschalteten und der ersten Turbine (9) vorgeschalteten und in den Wasserkreislauf (W) des Dampferzeugers eingebundenen Wärmetauscher (8), wobei bei druckaufgeladenem Betrieb das Rauchgas mit hoher Temperatur, vorzugsweise Feuerraumtemperatur, zunächst über die zweite Gasturbine (7) und danach über den Wärmetauscher (8) und die erste Gasturbine (9) geführt wird, deren Auslaß mit einem Kamin (10) verbunden ist, dadurch gekennzeichnet, daß zwischen der zweiten Gasturbine (7) und dem Wärmetauscher (8) einerseits sowie zwischen dem zweiten Verdichter (3) und der Feuerung (1) andererseits zusätzlich ein außerhalb der Feuerung angeordneter Rauchgas-Verbrennungsluft-Wärmetauscher (5) für die verdichtete Verbrennungsluft eingeschaltet ist, daß der erste Verdichter (2) und die erste Gasturbine (9) auf freilaufender Welle betreibbar sind und daß die dem zweiten Verdichter (3) zugeordnete elektrische Maschine (13) auch als Generator betreibbar ist.

2. Feuerung nach Anspruch 1, dadurch gekennzeichnet, daß dem in den Wasserkreislauf (W) des Dampferzeugers eingebundenen Wärmetauscher (8) eine steuerbare (14) Rauchgas-Umgehungsleitung (15) parallel geschaltet ist.

3. Feuerung nach Anspruch 1 oder 2, dadurch gekennzeichnet, daß bei nicht aufgeladenem Betrieb dem ersten Verdichter (2) und einem Kühler (4) zwischen den Verdichtern (2, 3) eine Verbrennungsluft-Umgehungsleitung (16) und der zweiten Turbine (9) eine Rauchgas-Umgehungsleitung (17) zugeordnet sind, die beide vorzugsweise steuerbar sind.

## Claims

1. Firing equipment (1) operable under turbocharge for a steam generator, especially fluidized bed firing equipment, with at least two with respect to air successively arranged air compressors (2, 3) rotating independently from each other, of which air compressors the first is driven while forming a turbocharger by a first gas turbine (9), in which the energy needed for driving the compressor is extracted from the flue gas of the turbocharged firing equipment, and of which air compressors the second compressor (3) is driven by a second gas turbine (7), an electrical machine (13) being associated to said second compressor, and including a heat exchanger (8) arranged after the second turbine (7) and before the first turbine (9) and arranged in the water circulation (W) of the steam generator, whereby during turbocharged operation the flue gas is conveyed at high temperature, especially combustion chamber temperature, first through the second turbine (7) and subsequently through the heat exchanger (8) and the first gas turbine (9), the outlet of which is connected to a stack (10), characterized

– in that between the second gas turbine (7) and the heat exchanger (8) on one hand and between the second compressor (3) and the firing mechanism (1) on the other hand additionally a flue gas-combustion air-heat exchanger (5) for the compressed combustion air is interconnected, which heat exchanger is arranged outside the firing equipment,

– in that the first compressor (2) and the first gas turbine (9) are operable on free-rotating shaft and

– in that the electrical machine (1) associated to the second compressor (13) is also operable as a generator.

2. Firing equipment according to claim 1, characterized in that a controllable (14) flue gas-bypass conduit (15) is connected in parallel to the heat exchanger (8) interconnected in the water circulation (W) of the steam generator.

3. Firing equipment according to claim 1 or 2, characterized in that during non-turbocharged operation a combustion air bypass conduit (16) is associated to the first compressor (2) and a cooler (4) between the compressors (2) and (3) and a flue gas bypass conduit (17) are associatd to the second turbine (9), both of the bypass conduits being preferably controllable.

**Revendications**

1. Foyer (1) agencé de manière à pouvoir fonctionner sous suralimentation et destiné à un générateur de vapeur, en particulier foyer à couches turbulentes, comportant, montés en une série sur le parcours de l'air et tournant indépendamment l'un de l'autre, au moins deux compresseurs d'air (2, 3), dont le premier, en formant un turbo-compresseur, est entraîné par une première turbine à gaz (9) dans laquelle l'énergie nécessaire pour entraîner le compresseur est tirée des gaz brûlés provenant du foyer suralimenté et dont le deuxième compresseur (3) est entraîné par une deuxième turbine à gaz (7), une machine électrique (13) étant associée au deuxième compresseur, le foyer comportant un échangeur de chaleur (8) qui est monté en aval de la deuxième turbine (7) et en amont de la première turbine (9) et qui est incorporé au circuit d'eau (W) du générateur de vapeur, foyer dans lequel, en fonctionnement avec suralimentation, les gaz brûlés à haute température, de préférence à la température de la chambre de combustion, sont amenés à circuler d'abord dans la deuxième turbine à gaz (7), puis dans l'échangeur de chaleur (8) et dans la première turbine à gaz (9), dont la sortie est reliée à und cheminée (10), caractérisé en ce qu'entre la deuxième turbine à gaz (7) et l'échangeur de chaleur (8) d'une part, ainsi qu'entre le deuxième compresseur (3) et le foyer (1) d'autre part, il est en outre intercalé un échangeur de chaleur (5) air comburant-gaz brûlés qui est disposé en dehors du foyer et qui est destiné à l'air comburant comprimé, en ce que le premier compresseur (2) et la première turbine à gaz (9) sont agencés de manière à pouvoir fonctionner sur des arbres fous et en ce que la machine électrique (13) associée au deuxième compresseur (3) est agencée de manière à pouvoir fonctionner également en générateur électrique.

2. Foyer selon la revendication 1, caractérisé en ce qu'une canalisation de contournement (15) pour les gaz brûlés, qui est agencée de manière à pouvoir être commandée (14), est montée en parallèle avec l'échangeur de chaleur (8) qui est incorporé au circuit d'eau (W) du générateur de vapeur.

3. Foyer selon la revendication 1 ou 2, caractérisé en ce que, pour le fonctionnement sans suralimentation, une canalisation de contournement (16) pour l'air comburant est associée au premier compresseur (2) et à un refroidisseur (4) qui est placé entre les compresseurs (2, 3), et une canalisation de contournement (17) pour les gaz brûlés est associée à la deuxième turbine (9), les deux étant de préférence, agencées de manière à pouvoir être commandées.